# EUROPÄISCHE PATENTSCHRIFT

(11) **EP 1 275 039 B1**
(45) Veröffentlichungstag und Bekanntmachung des Hinweises auf die Patenterteilung: **26.01.2005**
(21) Anmeldenummer: 01925552.0
(22) Anmeldetag: 17.04.2001
(51) Int. Cl.: G05D 16/06, F23N 1/00

(54) **GASDRUCKREGLER**
GAS PRESSURE REGULATOR
REGULATEUR DE PRESSION GAZEUSE

(30) Priorität: 18.04.2000 DE 10019049
(43) Veröffentlichungstag der Anmeldung: 15.01.2003
(73) Patentinhaber: Mertik Maxitrol GmbH & Co. KG, 06502 Thale (DE)
(72) Erfinder: BAYER, Detlef, 59329 Wadersloh (DE)
(74) Vertreter: Albrecht, Günter
(86) Internationale Anmeldenummer: PCT/EP2001/004301
(87) Internationale Veröffentlichungsnummer: WO 2001/079951

(56) Entgegenhaltungen:
- EP-A- 0 949 455
- FR-A- 2 447 573
- JP-A- 61 031 778

## Beschreibung

### Technisches Gebiet

Die Erfindung betrifft einen Gasdruckregler für einen Gasbrenner nach dem Oberbegriff des ersten Patentanspruches.

### Stand der Technik

Gasdruckregler, die Gasbrennern vorgeschaltet sind, gibt es in einer Vielzahl von Ausführungen. Für den Einsatz in Verbindung mit Gasbrennern, welche im Betrieb mit Zweipunktregelung gefahren werden, muss der Gasdruckregler den Ausgangsdruck bei einem bestimmten Gasdurchfluss konstant halten. Gegebenenfalls soll er zusätzlich einen Pilotbrenner und/oder einen Nullabschluss aufweisen. Die Gasdruckregler bekannter Bauweise sind für diese Betriebsart gut geeignet, da sie einen eingestellten Ausgangsdruck innerhalb eines bestimmten Durchflussbereichs konstant halten. Wird der angeschlossene Gasbrenner abgeschaltet, so steigt der Ausgangsdruck geringfügig an und schließt über eine Regelmembran das Regelventil.

Eine weitere Verwendung ist der Einsatz in Verbindung mit einem modulierenden Gasbrenner. Dabei gibt es vorzugsweise zwei Möglichkeiten. Bei einer ersten Möglichkeit soll der Ausgangsdruck konstant bleiben. Das ist der Fall, wenn dem Gasdruckregler ein Durchflussregler, beispielsweise eine motorisch angetriebene Drosselklappe nachgeschaltet ist, oder wenn ein Nulldruckregler den Ausgangsdruck innerhalb einer zulässigen Toleranz konstant auf Null hält. Abhängig vom Unterdruck hinter der Brennerdüse stellt sich dann der geforderte Durchfluss ein. Bei einer zweiten Möglichkeit soll der Ausgangsdruck veränderlich sein. Dazu wird beispielsweise ein sogenannter Gleichdruckregler verwendet, bei dem der Ausgangsdruck entweder durch einen Steuerdruck, welcher auf die Oberseite der Arbeitsmembran wirkt, verändert wird, wobei der Durchfluss wiederum vom Ausgangsdruck abhängig ist, oder es wird ein elektronisch modulierender Gasdruckregler eingesetzt, bei dem an Stelle eines Steuerdruckes ein elektrischer Strom oder eine Spannung zur Regelung verwendet wird.

In jedem Fall muss der Gasdruckregler in der Lage sein, den Gasbrenner über den gesamten Modulationsbereich und während des Zündvorgangs mit der richtigen Gasmenge zu versorgen. Gerade bei im Verhältnis zum maximalen Durchfluss kleinen Durchflüssen ist es jedoch bei Gasdruckreglern von Nachteil, dass sie zum Vibrieren oder Pumpen neigen, oder in einer beliebigen Position hängen bleiben. Dieses Verhalten wird durch die mechanische Reibung der Stellglieder verursacht. Tritt dieser Effekt auf, so kann kein reproduzierbarer Ausgangsdruck oder Durchfluss eingestellt werden. Um die Einstellung eines reproduzierbaren Ausgangsdruckes oder Durchflusses zu ermöglichen wird üblicherweise eine Bypass - Öffnung verwendet. Nachteilig ist dabei, dass der Gasdruckregler dadurch keinen Nullabschluss mehr aufweist.

Weiterhin ist es bei Gasbrennern, die mit einem großen Modulationsbereich betrieben werden, in vielen Fällen nicht möglich, den Gasbrenner mit Kleinlast zu zünden, da die Gasmenge nicht ausreicht, um ein zündfähiges Gemisch zu bilden. Üblicherweise wird deshalb der Gasbrenner über eine separate Gasleitung mit einer Startgasmenge versorgt. Diese, vom Hauptstrang abzweigende Gasleitung benötigt zusätzlich ein als sogenanntes Startlastventil dienendes Magnetventil, eine feste oder, um den Volumenstrom verändern zu können, eine einstellbare Drossel und eine Einspeisung in den Gasbrenner.

Hierbei ist es vor allen Dingen von Nachteil, dass eine separate Gasleitung verlegt werden muss, was nicht nur Aufwand, sondern auch zusätzlichen Platzbedarf erfordert. Außerdem sind mehrere zusätzliche Verbindungsstellen vorhanden, bei denen eine Gasdichtheit nach außen gewährleistet sein muss.

Es ist desweiteren eine Lösung bekannt, bei der das Startlastventil an einem Gasgleichdruckregler befestigt ist, so dass das Verlegen einer separaten Gasleitung nicht mehr erforderlich ist. Dabei wird das Startlastventil über zwei Schrauben mit dem Gehäuse des Gasgleichdruckreglers verbunden. Diese Schrauben sind in Längsrichtung mit einer Sackbohrung sowie innerhalb des Gehäuses des Startlastventils mit einer Querbohrung versehen, werden in die eingangs- und ausgangsseitig vorhandenen Messanschlüsse des Gasgleichdruckreglers eingeschraubt und dienen so der Gaszufuhr bzw. der Gasabfuhr Der Gasdurchfluss wird auch bei dieser Lösung mit einem Magnetventil nach bekannter Bauweise gesperrt. Zusätzlich ist eine Einstellung des Volumenstroms mittels einer einstellbaren Blende möglich.

Auch bei dieser Ausführung ist es von Nachteil, dass mehrere zusätzliche Verbindungsstellen vorhanden sind, bei denen eine Gasdichtheit nach außen gewährleistet sein muss. Auf Grund dessen, dass der Gasstrom mehrfach umgelenkt und gedrosselt wird, ergibt sich desweiteren ein hoher interner Druckverlust. Durch die vielen Einzelteile ist außerdem ein hoher Fertigungsaufwand notwendig. Hinzu kommt, dass der zur Einstellung mögliche Verstellweg nur relativ gering ist, so dass eine schlechte Einstellgenauigkeit vorhanden ist.

### Darstellung der Erfindung

Der Erfindung liegt das Problem zugrunde, einen Gasdruckregler der genannten Art zu entwickeln, bei dem die oben genannten Nachteile des Standes der Technik vermieden werden. Insbesondere soll für den gesamten Regelbereich die Einstellung eines reproduzierbareren Ausgangsdruckes oder Durchflusses bei gleichzeitiger Beibehaltung der Möglichkeit des Nullabschlusses ermöglicht werden. Desweiteren sollen Gasbrenner, die mit einem großen Modulationsbereich betrieben werden, gezündet werden können. Auch soll der innere Druckverlust so niedrig wie möglich sein. Weiterhin sind der Herstellungsaufwand und die Anzahl der Dichtstellen möglichst gering zu halten.

Erfindungsgemäß wird das Problem dadurch gelöst, dass die einlassseitige Kammer und die auslassseitige Kammer zusätzlich zu dem für die Druckregelung vorhandenem Durchlass durch eine oder mehrere separate Öffnungen verbunden sind, die jeweils einen Sitz für einen ihnen zugeordneten und in axialer Richtung auf den Sitz geführten Verschlusskörper bilden, der seinerseits mit einem Anker eines ihm zugeordneten Magnetventils verbunden ist.

Damit wurde eine Lösung gefunden, die die genannten bisherigen Nachteile des Standes der Technik beseitigt. Weiterhin zeichnet sich diese Lösung vor allen Dingen durch ihre Einfachheit und ihre geringe Baugröße aus.

Eine vorteilhafte Ausgestaltung der Erfindung ergibt sich, wenn das Gehäuse des Gasdruckreglers und das Gehäuse des Magnetventils einstückig ausgeführt sind, so dass die Anzahl der Dichtstellen noch weiter verringert werden kann.

Desweiteren wird dadurch, dass der Längshub des Ankers einstellbar ist, eine einfache Justierung des Volumenstromes, der zur Zündung des Gasbrenners erforderlich ist, ermöglicht.

Eine weitere vorteilhafte Ausgestaltung der Erfindung ergibt sich durch eine wechselbare Ausführung des Sitzes. Damit wird es in einfacher Weise ermöglicht, eine Anpassung an unterschiedliche Durchflussbereiche vorzunehmen.

Wenn beispielsweise die Kleinlast und/oder die Startlast innerhalb des weiter oben beschriebenen nicht reproduzierbaren Regelbereichs liegen, so kann dieser Effekt vermieden werden, indem ein Gasdruckregler dieser Art verwendet wird und gleichzeitig das Regelventil dieses Gasdruckreglers geschlossen bleibt, solange die Gasmenge so gering ist, dass ein Vibrieren droht. Steigt die geforderte Gasmenge an, so öffnet das Regelventil so weit, dass eine zuverlässige und vibrationsfreie Regelung möglich ist.

Wird der Gasbrenner bei Kleinlast gezündet, so wird außerdem auch der Nullabschluss des Gasdruckreglers erhalten. Dies wird auch dann erreicht, wenn der Gasbrenner bei einer Startlast gezündet wird, welche kleiner als die Kleinlast ist und wo nur die Startlast in den kritischen Bereich fällt.

Fallen hingegen Startlast und Kleinlast in den kritischen Bereich, so besteht die Möglichkeit einen Gasdruckregler zu verwenden, der zwei separate Öffnungen aufweist, die über ebenfalls separate Magnetventile angesteuert werden. Nach dem Zünden des Brenners öffnet das zweite Magnetventil und stellt die Kleinlastmenge zur Verfügung. Auch hier kann der Nullabschluss des Gasdruckreglers erhalten werden.

Diese Möglichkeit der Ausführung eines Gasdruckreglers mit zwei separaten Öffnungen, die über ebenfalls separate Magnetventile angesteuert werden, findet auch Verwendung, wenn der Gasbrenner mit einer Startlast gezündet wird, welche größer als die Kleinlast ist. Das erste Magnetventil wird für den Zündvorgang eingeschaltet und erhöht die Gasmenge bis zur erfolgten Zündung. Nach der Zündung schließt dieses Magnetventil. Die Kleinlastmenge wird durch das zweite Magnetventil zur Verfügung gestellt. So kann auch hier der Nullabschluss des Gasdruckreglers erhalten werden.

### Ausführungsbeispiel

Die Erfindung wird nachstehend an einem Ausführungsbeispiel näher beschrieben. Es zeigen:
- Fig. 1: einen erfindungsgemäßen Gasdruckregler im Teilschnitt,
- Fig. 2: eine Ansicht des erfindungsgemäßen Gasdruckreglers aus Fig. 1 im Schnitt A - A.

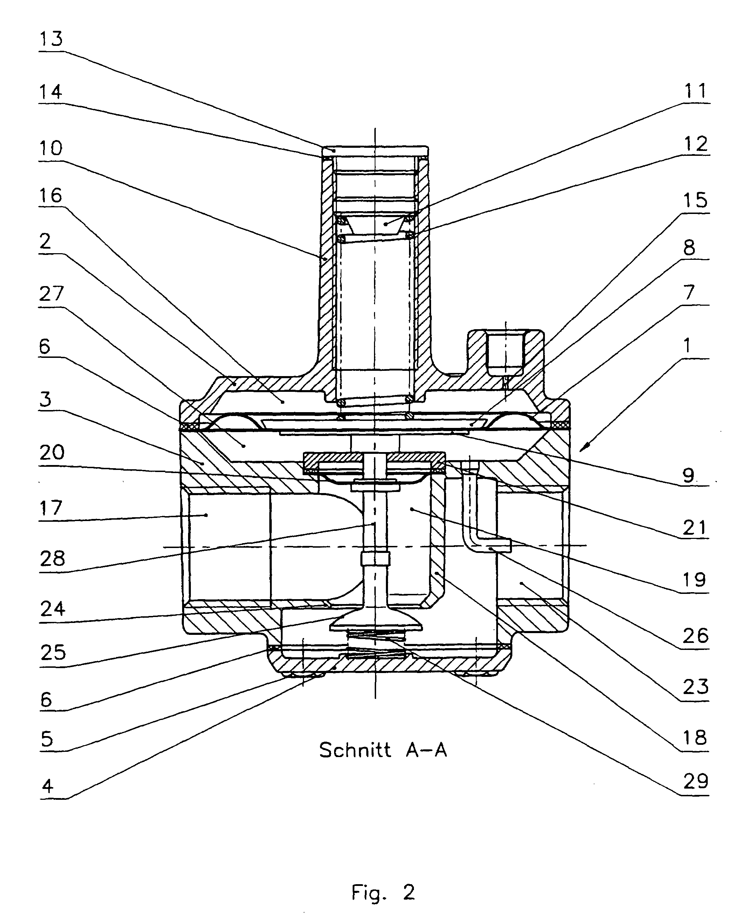

Der in Fig. 2 dargestellte beispielhafte erfindungsgemäße Gasdruckregler weist ein aus Aluminium bestehendes Gehäuse 1 auf, das aus einem Deckel 2, einem Unterteil 3 und einem Boden 4 zusammengesetzt ist. Dabei sind Deckel 2 und Unterteil 3, sowie Unterteil 3 und Boden 4 durch Befestigungsschrauben 5 fest miteinander verbunden. Zur Erzielung der geforderten Gasdichtheit befindet sich zwischen den einzelnen Teilen jeweils eine Flachdichtung 6. Zusätzlich ist zwischen Deckel 2 und Unterteil 3 der äußere Rand einer Druckmembran 7 eingespannt, die desweiteren beidseitig mittig durch einen oberen Membranteller 8 bzw. einen unteren Membranteller 9 abgestützt wird.

Der Deckel 2 besitzt auf seiner dem Unterteil 3 abgewandten Seite einen rohrförmigen Aufsatz 10. In einem im Inneren des rohrförmigen Aufsatzes 10 befindlichen Gewinde wird ein Druckstück 11 schraubbar geführt, an dem sich eine Einstellfeder 12 abstützt, die mit ihrem anderen Ende auf den oberen Membranteller 9 einwirkt. Durch eine Verschlussschraube 13 wird der Aufsatz 10 nach außen verschlossen. Mittels einer zwischen beiden Teilen angeordneten Dichtung 14 wird die Gasdichtheit gewährleistet. Über eine im Deckel 2 befindliche Atmungsöffnung 15 ist der durch Deckel 2 und Druckmembran 7 umschlossene Raum 16 mit der Umgebung oder einem Steuerdruck (z. B. Gebläsedruck) verbunden.

Ein im Unterteil 3 befindlicher Gaseingang 17, der in diesem Ausführungsbeispiel mit einem Innengewinde versehen ist, steht mit einer durch einen im Inneren des Unterteils 3 befindlichen und einstückig mit ihm verbundenen topfförmigen Einsatz 18 gebildeten einlassseitigen Kammer 19 in Verbindung, die in Deckelrichtung durch eine Ausgleichsmembran 20 verschlossen ist, deren äußerer Rand mittels eines im Einsatz 18 eingepressten Ringes 21 eingespannt ist. In der der Ausgleichsmembran 20 gegenüberliegenden Seite des Einsatzes 18 befindet sich eine zentrisch zum Ring 21 angeordnete Öffnung in eine durch das Unterteil 3, den Boden 4, und den Einsatz 18 umschlossene auslassseitige Kammer 22, die ihrerseits mit einem im Unterteil 3 befindlichen und ebenfalls ein Innengewinde aufweisenden Gasausgang 23 verbunden ist. Die dem Boden 4 zugewandte Seite der Öffnung ist als Ventilsitz 24 für einen in der auslassseitigen Kammer 22 befindlichen Ventilteller 25 ausgeführt, die gemeinsam das Druckregelventil des Gasdruckreglers bilden. Im Bereich des Gasausganges 23 befindet sich ein Druckausgleichsröhrchen 26, das die auslassseitige Kammer 22 mit dem zwischen der Druckmembran 7 und der Ausgleichsmembran 20 befindlichen Druckausgleichsraum 27 verbindet. Unter dem Ventilteller 25 befindet sich eine Gegenfeder 29, welche den Ventilteller 25 im Ruhezustand in den Ventilsitz 24 drückt.

Ein in die einlassseitige Kammer 19 ragender und einstückig mit dem Ventilteller 25 verbundener hohler Schaft ist auf einer längsbeweglichen Stange 28 befestigt, die mittig durch die an ihr befestigte Ausgleichsmembran 20 hindurch ragt und desweiteren ebenfalls mittig im Ring 21 geführt ist. Mit ihrem dem Ventilteller 25 abgewandten Ende ist die Stange 28 mittig an dem oberen und dem unteren Membranteller 8/9 befestigt. Zur Begrenzung des Öffnungshubes dient der Ring 21 als Anschlag für den unteren Membranteller 9.

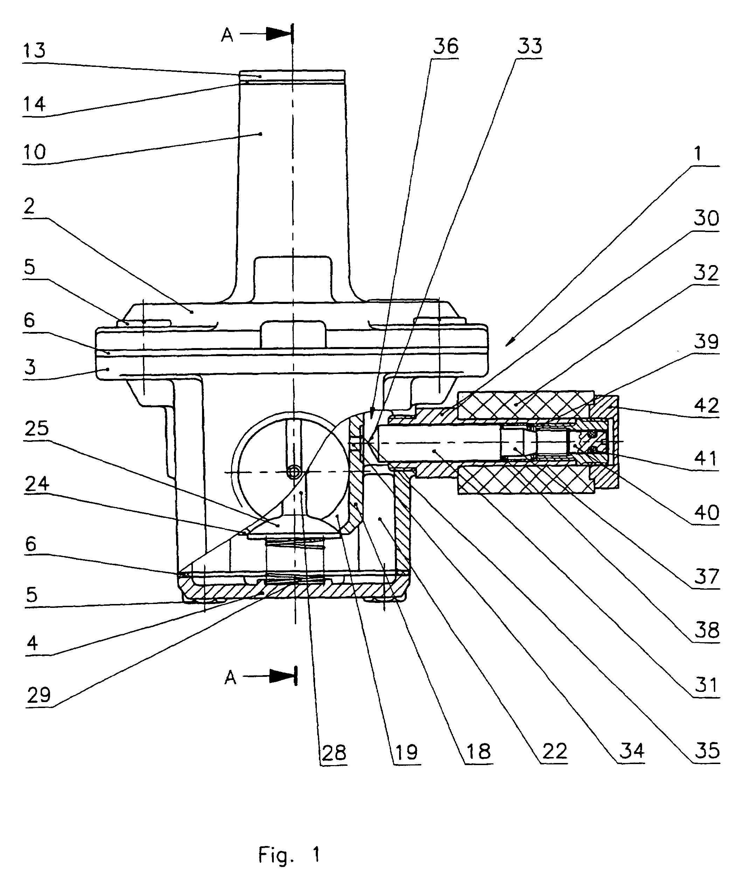

Wie aus Fig. 1 zu ersehen ist, ist in die äußere Mantelfläche des Unterteiles 3 ein die Wandung durchbrechender erster Teil einer als Befestigungselement für einen weiter unten näher erläuterten elektrischen Magnetantrieb dienenden Führungshülse 30 gasdicht eingeschraubt, in der ein Anker 31, der zusammen mit einer auf der Führungshülse 30 angeordneten Spule 32 einen elektrischen Magnetantrieb bildet, längsbeweglich geführt ist. An seinem in die auslassseitige Kammer 22 ragenden Ende weist der Anker 31 einen in diesem Ausführungsbeispiel als Schließkegel ausgebildeten Verschlusskörper 33 auf. In axialer Verlängerung des Ankers 31 besitzt der Einsatz 18 eine die einlassseitige Kammer 19 und die auslassseitige Kammer 22 verbindende Öffnung 34, die als Sitz 35 für den Verschlusskörper 33 dient. Sitz 35 und Verschlusskörper 33 bilden gemeinsam ein sogenanntes Startlastventil 36. Vorteilhafterweise ist es auch möglich, in die Öffnung 34 eine nicht dargestellte auswechselbare Buchse einzusetzen, wobei jeder Buchsen ein anderer Öffnungsquerschnitt des Sitzes 35 zugeordnet ist.

Auf seiner dem Verschlusskörper 33 abgewandten Seite weist der Anker 31 eine Einschnürung 37 auf, auf der eine Schließfeder 38 geführt ist, die so auf den Anker 31 einwirkt, dass der Verschlusskörper 33 auf dem Sitz 35 aufliegt und auch bei einem maximalen Eingangsdruck in der einlassseitigen Kammer 19 das Startlastventil 36 geschlossen bleibt. Dazu stützt sich die Schließfeder 38 andererseits an einem durch den zweiten Teil der Führungshülse 30, der in den ersten Teil eingeschraubt und gasdicht verklebt ist, gebildeten Bund 39 ab. Eine im zweiten Teil der Führungshülse 30 schraubbar geführte Einstellschraube 40 dient mit ihrer Stirnseite als Begrenzung des Öffnungshubes des Ankers 31. Zur Erzielung der notwendigen Dichtheit ist die Einstellschraube 40 mit einer umlaufenden Nut versehen, in der ein Nullring 41 gelagert ist. Die Führungshülse 30 ist zum Schutz der Einstellschraube 40 durch eine aufgeschraubte Abdeckkappe 42 verschlossen, die gleichzeitig zur Lagefixierung der Spule 32 dient.

Die Wirkungsweise des in diesem Ausführungsbeispiel beschriebenen erfindungsgemäßen Gasgleichdruckreglers ist wie folgt:

Das Startlastventil 36 und das Druckregelventil befinden sich beim Nichtbetrieb des ausgangsseitig an den erfindungsgemäßen Gasdruckregler angeschlossenen jedoch nicht dargestellten Gasbrenners in ihrer Geschlossenstellung. Zur Inbetriebnahme des Gasbrenners ist ein zündfähiges Gemisch notwendig. Um die dazu notwendige Gasmenge bereit zu stellen, wird die Spule 32 elektrisch angesteuert. Das hat zur Folge, dass der Anker 31 entgegen der Kraft der Schfießfeder 38 bis zu seinem Anschlag gegen die Einstellschraube 40 gedrückt wird, wodurch eine Öffnung des Startlastventils 36 erfolgt (Fig. 1). Über die Einstellschraube 40 ist es möglich vorab den erforderlichen Öffnungshub und damit die Gasmenge einzustellen. Insbesondere durch Verwendung eines Feingewindes ist dabei eine sehr genaue Einstellung möglich. Selbst eine Begrenzung des Öffnungshubes auf den Wert "Null" ist denkbar. Nach dem erfolgten Zünden des Gasbrenners wird die elektrische Ansteuerung der Spule 32 unterbrochen und unter der Kraft der Schließfeder 38 wird der Verschlusskörper 33 gegen den Sitz 35 gedrückt. In Abhängigkeit von der über das Druckstück 11 vorgenommenen Vorspannung der Einstellfeder 12 und dem nun zugeschaltetem Steuerdruck wird der Ausgangsdruck des zum Gasbrenner strömenden Gases, der dem Druck in der auslassseitigen Kammer 22 entspricht, in an sich bekannter Weise geregelt und konstant gehalten (Fig. 2).

### Aufstellung der Bezugszeichen

- 1: Gehäuse
- 2: Deckel
- 3: Unterteil
- 4: Boden
- 5: Befestigungsschraube
- 6: Flachdichtung
- 7: Druckmembran
- 8: Oberer Membranteller
- 9: Unterer Membranteller
- 10: Aufsatz
- 11: Druckstück
- 12: Einstellfeder
- 13: Verschlussschraube
- 14: Dichtung
- 15: Atmungsöffnung
- 16: Raum
- 17: Gaseingang
- 18: Einsatz
- 19: Einlassseitige Kammer
- 20: Ausgleichsmembran
- 21: Ring
- 22: Auslassseitige Kammer
- 23: Gasausgang
- 24: Ventilsitz
- 25: Ventilteller
- 26: Druckausgleichsröhrchen
- 27: Druckausgleichsraum
- 28: Stange
- 29: Gegenfeder
- 30: Führungshülse
- 31: Anker
- 32: Spule
- 33: Verschlusskörper
- 34: Öffnung
- 35: Sitz
- 36: Startlastventil
- 37: Einschnürung
- 38: Schließfeder
- 39: Bund
- 40: Einstellschraube
- 41: Nullring

## Patentansprüche

1. Gasdruckregler, bestehend aus einem gasdichten Gehäuse (1), das im Inneren eine einlassseitige Kammer (19) und eine auslassseitige Kammer (22) aufweist, die durch einen Durchlass miteinander verbunden sind, wobei der Durchlass einen Ventilsitz (24) für einen im Gehäuse (1) beweglichen und mittels einer Stange (28) in axialer Richtung auf den Ventilsitz (24) geführten Ventilteller (25) bildet, und desweiteren die Stange (28) an ihrem vom Ventilteller (25) abgewandten Ende mit einer Druckmembran (7) verbunden ist, wobei die Druckmembran (7) vom Druck in der auslassseitigen Kammer (22) in Schließrichtung und von einer Einstellfeder (12) in Öffnungsrichtung des Ventiltellers (25) beaufschlagt wird, **dadurch gekennzeichnet, dass** die einlassseitige Kammer (19) und die auslassseitige Kammer (22) durch eine oder mehrere separate Öffnungen (34) verbunden sind, die jeweils einen Sitz (35) für einen ihnen zugeordneten und in axialer Richtung auf den Sitz (35) geführten Verschlusskörper (33) bilden, der seinerseits mit einem Anker (31) eines ihm zugeordneten elektrischen Magnetantriebes verbunden ist.

2. Gasdruckregler nach Patentanspruch 1, **dadurch gekennzeichnet, dass** das Gehäuse (1) des Gasdruckreglers und das Befestigungselement (30) des elektrischen Magnetantriebes einstückig ausgeführt sind.

3. Gasdruckregler nach Patentanspruch 1 oder 2, **dadurch gekennzeichnet, dass** der Längshub des Ankers (31) einstellbar ist.

4. Gasdruckregler nach einem der Patentansprüche 1 bis 3, **dadurch gekennzeichnet, dass** der Sitz (35) wechselbar ausgeführt ist.

## Claims

1. Gas pressure regulator, comprising a gas-tight casing (1) that houses an inlet-side chamber (19) and an outlet-side chamber (22) connected with each other by a passage, where such passage forms a valve seat (24) to accommodate a valve disk (25) that is guided through a rod (28) and can be moved in axial direction inside the casing (1), and where said rod (28) is connected to a pressure diaphragm (7) at its far end seen from the valve disk (25), whereby the pressure diaphragm (7) is pressurized by the pressure built up in the outlet-side chamber (22) and pushed into closing direction, whereat the adjusting spring (12) pushes said pressure diaphragm (7) into opening direction of the valve disk (25), **characterized in that** the inlet-side chamber (19) and the outlet-side chamber (22) are connected to each other by one or more separate openings (34) with each of such opening forming a seat (35) for a closing body (33) that is individually assigned to said opening and guided in axial direction to its seat (35), whereat each such closing body (33) is connected to the armature (31) of an electro-magnetic drive assigned to it.

2. Gas pressure regulator according to claim 1, **characterized in that** the gas pressure regulator's casing (1) and the fixing element (30) of the electro-magnetic drive are constructed as one single piece.

3. Gas pressure regulator according to claims 1 and 2, **characterized in that** the armature's (31) longitudinal stroke length can be adjusted.

4. Gas pressure regulator according to one of the claims 1 to 3, **characterized in that** the seat (35) is designed as an interchangeable element.

## Revendications

1. Le régulateur de pression du gaz est constitué d'un boîtier (1) étanche au gaz comportant à l'intérieur une chambre côté entrée (19) et une chambre côté sortie (22), qui sont reliées entre elles par un canal, le canal formant un siège de vanne (24) pour un plateau de vanne (25), se déplaçant dans le boîtier (1), mené en direction axiale sur le siège de vanne (24) par une tige (28), et d'autre part la tige (28) étant reliée par son extrémité, opposée au plateau de vanne (25), à une membrane de pression (7), la membrane de pression (7) étant soumise à la pression dans la chambre côté sortie (22) en direction de fermeture et à la force d'un ressort de réglage (12) en direction d'ouverture du plateau de vanne (25), **caractérisé par le fait que** la chambre côté entrée (19) et la chambre côté sortie (22) sont reliées par une ou plusieurs ouvertures (34) séparées, formant chacune un siège (35) pour un corps de fermeture (33) qui leur est affecté et qui est mené en direction axiale sur le siège (35), le corps de fermeture (33) est relié, quant à lui, à la palette (31) d'un entraînement électromagnétique qui lui est affecté.

2. Régulateur de pression du gaz selon la revendication du brevet 1, **caractérisé par le fait que** le boîtier (1) du régulateur de pression du gaz et l'élément de fixation (30) de l'entraînement électromagnétique sont formés d'une seule pièce.

3. Régulateur de pression du gaz selon la revendication du brevet 1 ou 2, **caractérisé par le fait que** la course longitudinale de la palette (31) est réglable.

4. Régulateur de pression du gaz selon une des revendications du brevet de 1 à 3, **caractérisé par le fait que** le siège (35) est réalisé de manière échangeable.
